# EUROPEAN PATENT SPECIFICATION

(11) **EP 0 875 429 B1**
(45) Date of publication and mention of the grant of the patent: **20.02.2002**
(21) Application number: 98303444.8
(22) Date of filing: 01.05.1998
(51) Int. Cl.: B60R 22/48, B60R 22/18

(54) **Pretensioner**
Gurtstraffer
Tendeur de ceinture

(30) Priority: 01.05.1997 GB 9708938
(43) Date of publication of application: 04.11.1998
(73) Proprietor: BREED AUTOMOTIVE TECHNOLOGY, INC., Lakeland, County of Polk, Florida (US)
(72) Inventor: Williamson, Kenneth, Cotehill Carlisle CA40DW (GB)
(74) Representative: Freeman, Jacqueline Carol

(56) References cited:
- EP-A- 0 535 389
- EP-A- 0 751 050
- US-A- 4 457 251
- US-A- 4 882 116

## Description

The present invention relates to pretensioners for passenger safety restraints and especially to indication of the activated state of a pretensioner. It is particularly applicable to a buckle pretensioner.

A pretensioner is used with a passenger safety restraint seat belt to pull back the buckle anchorage so as to tighten the seat belt about the occupant in the event of a crash condition being sensed. The pretensioning operation may be effected by release of a compressed spring or by a pyrotechnic device. It operates within the first few milliseconds after a crash condition being sensed and typically pulls the buckle anchorage back by 60-90 mm.

Such pretensioners are normally concealed from view, for example they may be under the vehicle seat. It is possible that the pretensioner can be activated without the knowledge of the vehicle owner, for example if the vehicle owner is not in the car at the time of a crash, or if the pretensioner is activated spuriously. In this situation unless the pretensioner is replaced or reset, then the pretensioning feature will not be available for a subsequent crash condition. It is known to provide means to indicate that pretensioner activation has occurred and one such example is given in the applicant's own WO95/16590, this describes a pneumatically operated system in which audible signals or a visible signal in the form of a brightly coloured balloon showing behind a transparent window, are described.

It is also known from EP 0 535 389, to provide a visible plastic flag within the sheath of a buckle mounting stalk, such that when the buckle head is pulled back on its stalk, the flag is revealed from the top of the sheath so as to indicate activation of the pretensioner. In addition it is known to overprint this flat with a warning sign at the upper end which is exposed on pretensioner operation.

The present invention relates to an improvement on this flag.

According to the present invention there is provided a vehicle passenger safety restraint comprising a seat belt and a buckle for fastening the seat belt about an occupant to restrain the occupant in the event of a crash, and pretensioner means operable to move the buckle in a seat belt tightening direction in response to indication of a crash event occurring, and further comprising a pretensioner operation flag in the form of an elongate member having a generally planar face, the elongate member being fixed to the vehicle such that, in normal use, at least the generally planar face is hidden from view, and when the pretensioner has activated, at least a portion of the planar face is exposed to indicate that the pretensioner has operated, the improvement particularly being comprised in that the planar face has an indicator logo moulded or cut-out of the plastics material.

The logo may be cut-out of the plastics material in stencil form and is preferably visible from both sides of the indicator member.

The invention also provides a pretensioner operation flag with a moulded or cut-out warning logo for use in the above described safety restraint.

This arrangement has considerable advantages over the previously known printed flag since visibility of the sign is considerably improved. The sign is visible from both sides of the flag and therefore the flag can be used in many more orientations in the vehicle. This moulded or cut-out logo is not affected by contamination or degradation which typically wear off any printed sign. In addition there is a cost saving in manufacture since the extra step of printing is avoided and the expensive printing ink not necessary.

For a better understanding of the present invention and show how the same may be carried into effect, reference will now be made to the accompanying drawings in which:
Figure 1 is a front elevational view of a pretensioner indicator member as incorporated in the present invention;
Figure 2 is a cross-sectional view of the pretensioner indicator member of Figure 1;
Figures 3, 4 and 5 show three alternative forms for a cut-out warning logo for the pretensioner indicator member of Figures 1 and 2.

The pretensioner indicator member 1 is fixed at its lower end to the point at which a buckle is mounted to the vehicle chassis. This is usually a fixed rivet point. The indicator member is concealed behind a sheath covering the buckle stalk though in some cases a few millimetres of the top 3 of the indicator member 1 may show above the sheath and lie adjacent to the buckle head.

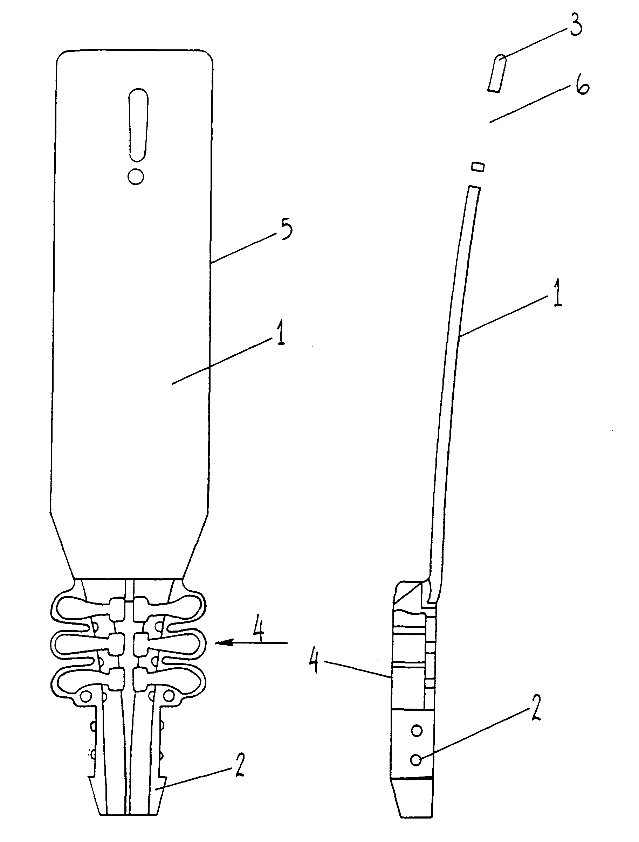

The indicator member 1 is formed of moulded plastics material and has a lower section 4 formed of convoluted loops which give the member some resiliency and allows it to bend more easily to the left and right as viewed in Figure 1. It has an upper flat section 5 and a logo 6 is moulded or cut-out in the upper part of this flat section, adjacent the top 3. It is this logo which is exposed when a pretensioning operation has occurred.

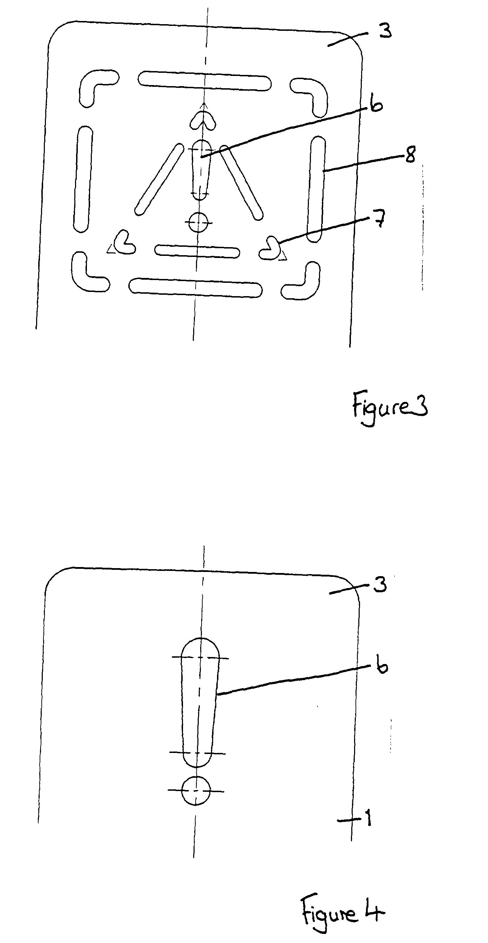

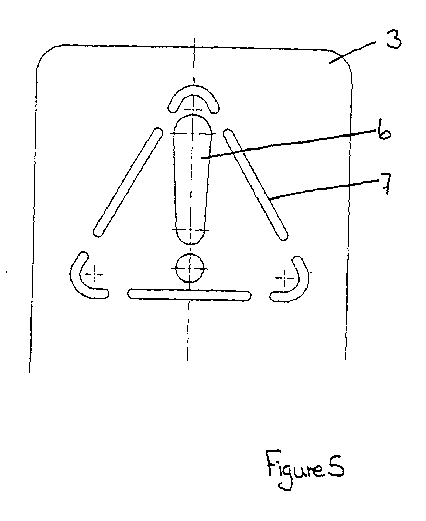

The logo 6 of Figure 1 is shown more clearly in Figure 4 and comprises a cut-out exclamation mark. The exclamation mark may be supplemented by a triangle so that the logo takes the form shown in Figure 5. It may be additionally supplemented by a square border 8 to produce the logo shown in Figure 3. Of course many other forms of logo would be equally appropriate.

## Claims

1. A vehicle passenger safety restraint comprising a seat belt and a buckle for fastening the seat belt about an occupant to restrain the occupant in the event of a crash, and pretensioner means operable to move the buckle in a seat belt tightening direction in response to indication of a crash event occurring, and further comprising a pretensioner operation flag (1) in the form of an elongate member having a generally planar face (5), the elongate member being fixed to the vehicle such that, in normal use, at least the generally planar face (5) is hidden from view, and when the pretensioner has activated, at least a portion of the planar face (5) is exposed to indicate that the pretensioner has operated, **characterised in that** the planar face (5) has an indicator logo (6) moulded or cut-out of the plastics material.

2. A safety restraint according to claim 1 wherein the logo (6) is cut-out of the plastics material in stencil form.

3. A safety restraint according to claim 1 or claim 2 wherein the logo (6) is visible from both sides of the indicator member.

4. A pretensioner operation flag for use in a safety restraint according to any one of claims 1, 2 or 3 in the form of an elongate member having a generally planar face (5), **characterised in that** the planar face has a moulded or cutout indicator logo.

## Patentansprüche

1. Fahrzeuginsassen-Sicherheitsrückhaltesystem, das folgendes aufweist: einen Sicherheitsgurt und ein Schloß zum Anlegen des Sicherheitsgurtes an einem Fahrzeuginsassen, um den Fahrzeuginsassen im Falle eines Crashs zurückzuhalten, und Vorspannmittel, die dahingehend wirken, das Schloß in Reaktion auf die Anzeige des Eintritts eines Crash-Ereignisses in einer Sicherheitsgurt-Straffungsrichtung zu bewegen, und das außerdem ein Vorspanner-Betätigungsschauzeichen (1) in Form eines länglichen Elements mit einer allgemein ebenen Fläche (5) umfaßt, wobei das längliche Element an dem Fahrzeug befestigt ist, derartig, daß bei der normalen Nutzung wenigstens die allgemein ebene Fläche (5) gegenüber Sicht verborgen ist und daß nach der Betätigung des Vorspanners wenigstens ein Abschnitt der ebenen Fläche (5) freigelegt wird, um anzuzeigen, daß der Vorspanner betätigt worden ist, **dadurch gekennzeichnet, daß** die ebene Fläche (5) ein Anzeigelogo (6) hat, das aus dem Kunststoffinaterial geformt oder herausgeschnitten worden ist.

2. Sicherheitsrückhaltesystem nach Anspruch 1, bei dem das Logo (6) in Schablonenform aus dem Kunststoffinaterial herausgeschnitten worden ist.

3. Sicherheitsrückhaltesystem nach Anspruch 1 oder Anspruch 2, bei dem das Logo (6) von beiden Seiten des Anzeigeelements sichtbar ist.

4. Vorspanner-Betätigungsschauzeichen für die Anwendung in einem Sicherheitsrückhaltesystem nach einem der Ansprüche 1, 2 oder 3 in Form eines länglichen Elements mit einer allgemein ebenen Fläche (5), **dadurch gekennzeichnet, daß** die ebene Fläche ein geformtes oder herausgeschnittenes Anzeigelogo hat.

## Revendications

1. Système de retenue de sécurité des passagers d'un véhicule comprenant une ceinture de siège et une boucle pour fixer la ceinture de siège autour d'un occupant pour retenir l'occupant en cas d'une collision, et un moyen de prétension destiné à déplacer la boucle dans une direction de serrage de la ceinture de siège en réponse à l'indication d'une collision, et comprenant en outre un fanion d'actionnement du dispositif de prétension (1) sous forme d'un élément allongé, comportant une face généralement plane (5), l'élément allongé étant fixé sur le véhicule de sorte qu'en service normal, au moins la face généralement plane (5) est cachée à la vue, et qu'après un actionnement du dispositif de prétension, au moins une partie de la face plane (5) est exposée pour signaler l'actionnement du dispositif de prétension, **caractérisé en ce que** la face plane (5) comporte un logo indicateur (6) moulé ou découpé à partir de matériau plastique.

2. Dispositif de retenue de sécurité selon la revendication 1, dans lequel le logo (6) est découpé de matériau plastique sous forme d'un pochoir.

3. Dispositif de retenue de sécurité selon les revendications 1 ou 2, dans lequel le logo (6) est visible des deux côtés de l'élément indicateur.

4. Fanion indiquant l'actionnement d'un dispositif de prétension utilisé dans un système de retenue de sécurité selon l'une quelconque des revendications 1, 2 ou 3, sous forme d'un élément allongé comportant une face généralement plane (5), **caractérisé en ce que** la face plane comporte un logo indicateur moulé ou découpé.
